# EUROPEAN PATENT APPLICATION

(11) **EP 2 930 769 A1**
(43) Date of publication of application: **14.10.2015**
(21) Application number: 13861450.8
(22) Date of filing: 02.12.2013
(51) Int. Cl.: H01M 2/20, H01M 2/10

(54) **POWER SUPPLY DEVICE**

(30) Priority: 07.12.2012 JP 2012268673
(71) Applicant: Yazaki Corporation, Tokyo 108-0073 (JP)
(72) Inventor: YOSHIOKA, Nobuaki, Kakegawa-shi Shizuoka 437-1421 (JP)
(74) Representative: Hoffmann Eitle
(86) International application number: PCT/JP2013/082321
(87) International publication number: WO 2014/087959

(57) **Abstract**

A power supply device (10) includes an electrode connecting body (22) including a first slide plate (19) which slides over one face (14) of a battery cell assembly (12) from one end side so as to connect positive electrodes (16) to first voltage detection terminals (18), and a second slide plate (21) which slides over the one face (14) of the battery cell assembly (12) from the other end side so as to connect negative electrodes (17) to second voltage detection terminals (20).

## Description

### TECHNICAL FIELD

The present invention relates to a power supply device used in a hybrid vehicle, an electric vehicle, and the like.

### BACKGROUND

In an electric vehicle that uses an electric motor as a driving source and a hybrid vehicle that uses both an engine and an electric motor as a driving source, a power supply device that supplies electricity to the electric motor is mounted. This power supply device supplies electricity to the electric motor by assembling a plurality of unit cells in parallel to form a battery cell assembly (battery module) and further arranging a plurality of the battery cell assemblies longitudinally and horizontally and connecting positive electrodes and negative electrodes of adjacent battery cell assemblies in series. Also, in such a power supply device, for uniform charging and discharging, voltage of the unit cells is detected successively to monitor the voltage. For the voltage detection of the unit cells, a plurality of the unit cells are connected at the positive electrode side and at the negative electrode side to form a positive electrode and a negative electrode, and these positive electrode and negative electrode are connected to a detection electrode of a voltage detection electric wire (conductor) terminal.

As a conventional example of such a power supply device, a power supply device that makes a method of connection between electrodes of unit cells and connection with detection electrodes for voltage detection easy is described in PTL 1. The connection method in the power supply device as described in PTL 1 assembles a plate provided with a plurality of busbars and terminals (or clips) to a battery cell assembly from the above, and positive electrodes and negative electrodes which are connected to the plurality of unit cells and which are projected from one face side of the battery cell assembly are mutually connected between the positive electrodes and between the negative electrodes at the busbars via the terminals. When the positive electrodes and the negative electrodes are connected to the busbars via the terminals as such, it becomes not necessary to fasten each of the positive electrodes and negative electrodes of the unit cells to the busbars by bolts and the like, and its connection operability is improved.

### CITATION LIST

### Patent Literature

PTL 1: JP 2010-055885 A

### SUMMARY

In the connection method in the power supply device of PTL 1, when the plurality of busbars are assembled to the plate, they are assembled from the protruding direction side of the positive electrodes and the negative electrodes (i.e., from the above) which protrude from one face side of the battery cell assembly (i.e., the plurality of unit cells). Thus, at the time of assembly, when a positional shift is occurring between the busbars and the plate, the busbars may come into contact with and deform the positive electrodes and the negative electrodes. Such a situation also may similarly occur with a connection with the detection electrode for voltage detection.

Further, since it is necessary that the plurality of busbars are assembled respectively to the plate beforehand, the number of parts becomes large, and in addition, the plate becomes heavy due to the plurality of busbars.

Accordingly, an object of the present invention is to provide a power supply device which does not deform the positive electrodes and the negative electrodes in the connection between electrodes of adjacent unit cells and in the connection with the electrodes for voltage detection of the unit cells, and which can make the number of parts count small and which can reduce the weight.

A power supply device according to a first aspect of the present invention is a power supply device in which on one face side of a battery cell assembly including a plurality of unit cells, each of the unit cells having a positive cell electrode and a negative cell electrode that project from one face side, which are stacked in parallel with the positive cell electrode and the negative cell electrode of adjacent unit cells being alternately arranged and being connected in series, a positive electrode for voltage detection connected to the positive cell electrode and a negative electrode for voltage detection connected to the negative cell electrode are protruded, and in which the positive electrode is connected to a first voltage detection terminal and the negative electrode is connected to a second voltage detection terminal. The power supply device includes an electrode connecting body including a first slide plate that connects the positive electrode with the first voltage detection terminal by slide movement over the one face of the battery cell assembly from one end side, and a second slide plate that connects the negative electrode with the second voltage detection terminal by slide movement over the one face of the battery cell assembly from the other end side.

By moving the first slide plate over the one face of the battery cell assembly from the one end side, the positive electrode and the first voltage detection terminal are connected and by moving the second slide plate over the one face of the battery cell assembly from the other end side, the negative electrode and the second voltage detection terminal are connected.

In this case, by the slide movement of the first slide plate, the positive electrode and the first voltage detection terminal are connected, and by the slide movement of the second slide plate, the negative electrode and the second voltage detection terminal are connected. Therefore, unlike in a case in which each voltage detection terminal is connected to the positive electrode and the negative electrode of one face side of the battery cell assembly from the above (the protruding direction side of the positive electrode and the negative electrode), it does not deform the positive electrode and the negative electrode.

Moreover, in connecting the positive electrode to the first voltage detection terminal, it simply assembles the first voltage detection terminal to the first slide plate, and in connecting the negative electrode to the second voltage detection terminal, it simply assembles the second voltage detection terminal to the second slide plate. Therefore, parts such as busbars and terminals and the like become unnecessary and it becomes possible to reduce the number of parts count, and as a result, it also becomes possible to reduce the weight.

The first slide plate preferably includes: a first plate body capable of slide movement over the one face of the battery cell assembly from one end side; a first electrode-holding vertical wall disposed on the first plate body which supports the first voltage detection terminal and which holds the positive electrode and the first voltage detection terminal together by slide movement of the first plate body over the one face of the battery cell assembly; and a first electrode guide portion disposed on the first plate body which guides the positive electrode to the first electrode-holding vertical wall that supports the first voltage detection terminal by the slide movement of the first plate body. The second slide plate preferably includes: a second plate body capable of slide movement over the one face of the battery cell assembly from the other end side; a second electrode-holding vertical wall disposed on the second plate body which supports the second voltage detection terminal and which holds the negative electrode and the second voltage detection terminal together by slide movement of the second plate body over the one face of the battery cell assembly; and a second electrode guide portion disposed on the second plate body which guides the negative electrode to the second electrode-holding vertical wall that supports the second voltage detection terminal by the slide movement of the second plate body.

When the first slide plate is slid over the one face of the battery cell assembly, the first voltage detection terminal of the first electrode-holding vertical wall is connected to the positive electrode, and when the second slide plate is slid over the one face of the battery cell assembly, the second voltage detection terminal of the second electrode-holding vertical wall is connected to the negative electrode. Therefore, even if positional shift is occurring between the positive electrode and the first voltage detection terminal or positional shift is occurring between the negative electrode and the second voltage detection terminal, the electrode guide portions guide the positive electrode and the negative electrodes to proper positions. As a result, it becomes possible to make sure that a collision between the positive electrode and the first voltage detection terminal, and a collision between the negative electrode and the second voltage detection terminal can be prevented, and thus, it does not deform the positive electrode and the negative electrode.

The first slide plate and the second slide plate are preferably mutually coupled either at one end side thereof or at the other end side thereof via a flexible coupling part, and the first slide plate and the second slide plate are preferably swingable so as to be capable of mutually approaching to or separating from each other.

With such a structure, the first slide plate and the second slide plate are mounted on the one face of the battery cell assembly in a state that the first slide plate and the second slide plate are in a direction of mutually separated from each other (the direction of opening) with the flexible coupling part at the center, and when the first slide plate and the second slide plate are swung in a direction of mutually approaching (the direction of closing) with the flexible coupling part at the center, the first slide plate and the second slide plate slidingly move over the one face of the battery cell assembly. This causes the positive electrode to be connected with the first voltage detection terminal, and the negative electrode to be connected with the second voltage detection terminal.

In this case, since it is structured such that the first slide plate and the second slide plate are coupled via the flexible coupling part, it is possible to slidingly move the first slide plate and the second slide plate in one operation, and the connection operation becomes easy.

The electrode connecting body preferably further includes: a first conductor whose one end side is connected to the positive electrode; a second conductor whose one end side is connected to the negative electrode; and a bundle connector which is connected to the other end side of the first conductor and the second conductor and which is connected externally. The flexible coupling part preferably includes: a bundle part that bundles the other end side of the first conductor and the second conductor immediately before the bundle connector; and a flexible part disposed on both sides of the bundle part which couples the first slide plate with the bundle part and which couples the second slide plate with the bundle part.

With the flexible part at both sides of the bundle part, the first slide plate and the second slide plate can swing with the bundle part at the center. With this, the first slide plate and the second slide plate can slidingly move over the one face of the battery cell assembly.

In this case, the position of the bundle part of the first conductor and the second conductor can be changed based on when one end of the first slide plate and the second slide plate are mutually connected at the flexible coupling part or when the other end are mutually connected. Therefore, the position of the bundle connector to be connected externally can be changed as necessary.

### BRIEF DESCRIPTION OF DRAWINGS

Fig. 1 is a perspective view illustrating a power supply device including a plurality of the battery cell assemblies, each of the battery cell assemblies including of a plurality of unit cells.
Fig. 2 is a perspective view illustrating the battery cell assembly including the unit cells, illustrating a state before slide movement of a first slide plate and a second slide plate, and before positive electrodes, negative electrodes, and voltage detection terminals are connected.
Fig. 3 is a perspective view illustrating the battery cell assembly composed of a plurality of the unit cells, illustrating a state in which the first slide plate and the second slide plate have slidingly-moved and the positive electrodes, the negative electrodes, and the voltage detection terminals are connected.
Fig. 4 is a cross-sectional view illustrating the first (second) slide plate and the cell electrodes.
Fig. 5 is a perspective view illustrating an electrode connecting body.
Fig. 6(a) is a plan view illustrating a state in which a flexible coupling part of the electrode connector is disposed on one end side (i.e., right side of the sheet) of a first slide substrate and a second slide substrate so as to bundle conductors to one end side;
and Fig. 6(b) is a plan view illustrating a state in which a flexible coupling part of the electrode connector is disposed on the other end side (i.e., left side of the sheet) of the first slide plate and the second slide plate so as to bundle conductors connected to the positive electrodes and the negative electrodes to the other end side.
Fig. 7 is a plan view illustrating the electrode connector, which shows a state before an unnecessary flexible coupling part is cut away.
Fig. 8 is a perspective view illustrating the first (second) slide plate, and first (second) electrode-holding vertical walls that support the first (second) voltage detection terminals disposed on the first (second) slide plate.
Fig. 9 is an exploded perspective view illustrating a connector that connects the battery cell assemblies with each other.
Fig. 10 is a cross-sectional view illustrating the connector that connects the battery cell assemblies with each other.

### DESCRIPTION OF EMBODIMENTS

Hereinafter, a power supply device according to an embodiment of the present invention will be explained by referring to the drawings.

A power supply device 10 according to the embodiment is mounted in an electric vehicle that uses an electric motor as a driving source, a hybrid vehicle that uses both an engine and an electric motor as a driving source, and the like, and supplies electricity to the electric motor.

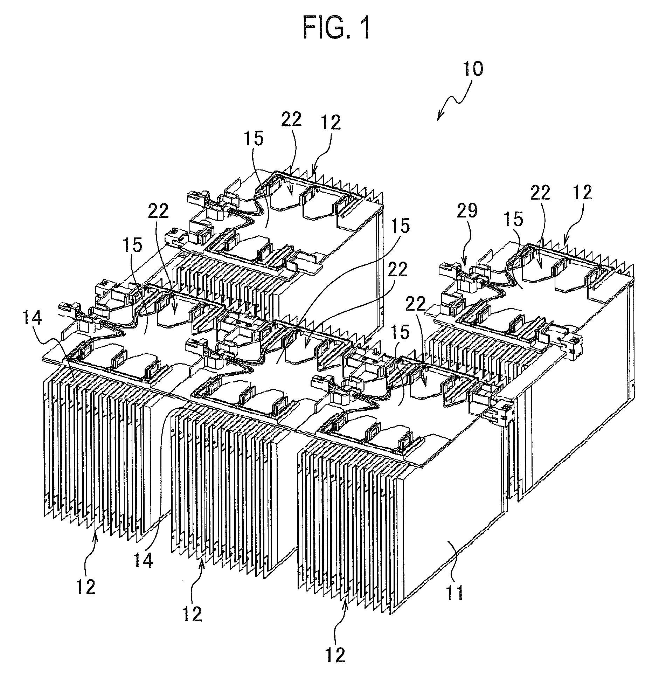

As illustrated in Figs. 1 to 3, the power supply device 10 is structured in which a battery cell assembly (battery module) 12 is formed by assembling a plurality of unit cells 11 in parallel, and a plurality of battery cell assemblies 12 are further arranged longitudinally and horizontally.

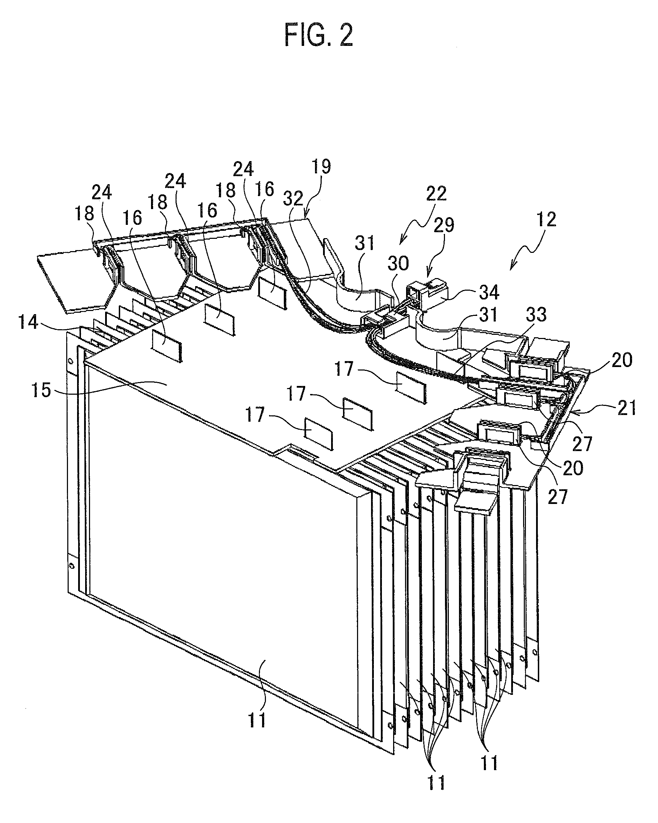

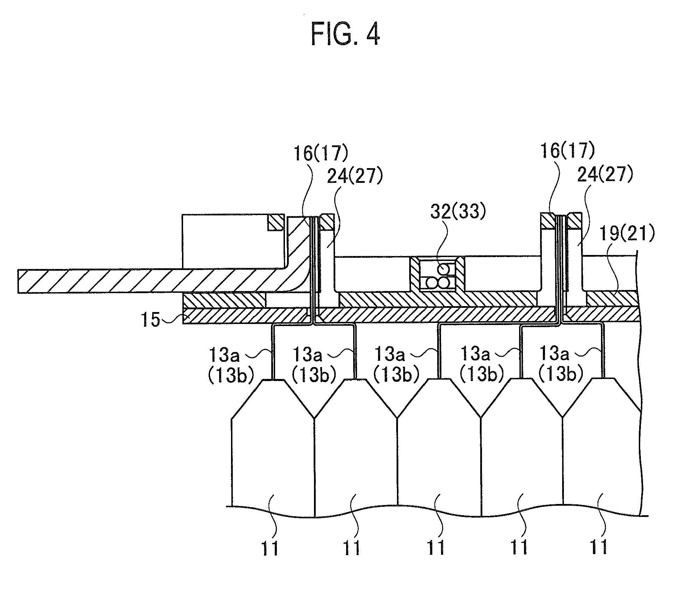

Each unit cell 11 has a rectangular thin plate like shape, and as illustrated in Fig. 4, positive cell electrodes 13a and negative cell electrodes 13b are projected from one face on its outer periphery. The battery cell assembly 12 which is assembled by stacking the plurality of unit cells 11 in parallel is made a rectangular parallelepiped shape as a whole. On top of one face 14 of the battery cell assembly 12, an insulation plate 15 is mounted. A number of the positive side cell electrodes 13a and a number of the negative side cell electrodes 13b, which are projected from the plurality of unit cells 11 respectively, are mutually connected between the number of positive electrodes 13a and between the number of negative electrodes 13b at the back face side (lower face side) of the insulation plate 15 respectively, and a positive electrode 16 is protruded from a group of the positive side cell electrodes 13a, and a negative electrode 17 is protruded from a group of the negative side cell electrodes 13b from the surface side (upper side) of the insulation plate 15 (see Fig. 2). In the embodiment below, the positive electrode 16 and the negative electrode 17 will be called a positive electrode and a negative electrode of the unit cell 11.

In a conventional example, there is a case in which a positive electrode and a negative electrode of each unit cell 11 are projected on the surface side of the insulation plate 15 respectively and adjacent positive electrodes and negative electrodes are connected in series by the busbars and the like. Whereas in the embodiment, positive electrodes and negative electrodes of a number of unit cells 11 that are adjacent with each other are respectively mutually connected between the positive electrodes and between the negative electrodes on the back face side of the insulation plate 15, and a group of plural unit cells 11 in which a number of the unit cells 11 are connected in parallel is further connected in series and the electrode thus taken out is projected on the surface side of the insulation plate 15 as the positive electrode 16 and the negative electrode 17 for voltage detection.

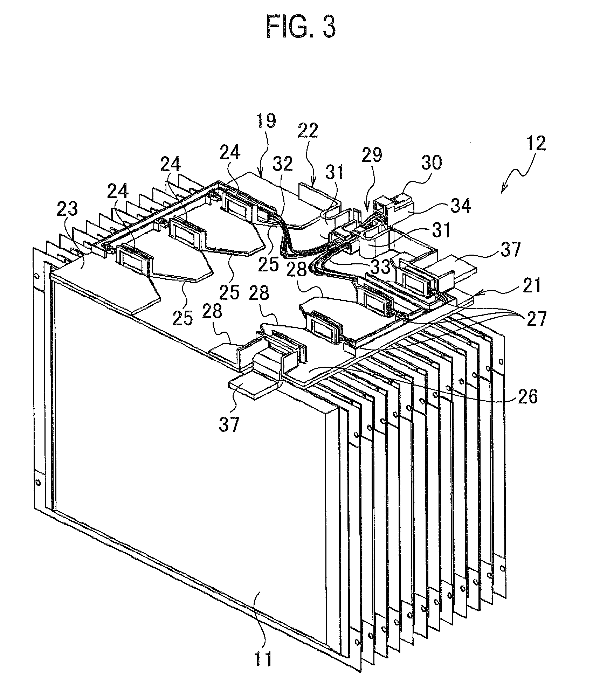

The power supply device 10 according to the embodiment, as illustrated in Figs. 2 and 3, includes an electrode connecting body 22 that has a first slide plate 19 which slides over one face 14 of the battery cell assembly 12 from one end side so as to connect the positive electrodes 16 to first voltage detection terminals 18, and a second slide plate 21 which slides over the one face 14 of the battery cell assembly 12 from the other end side so as to connect the negative electrodes 17 to second voltage detection terminals 20.

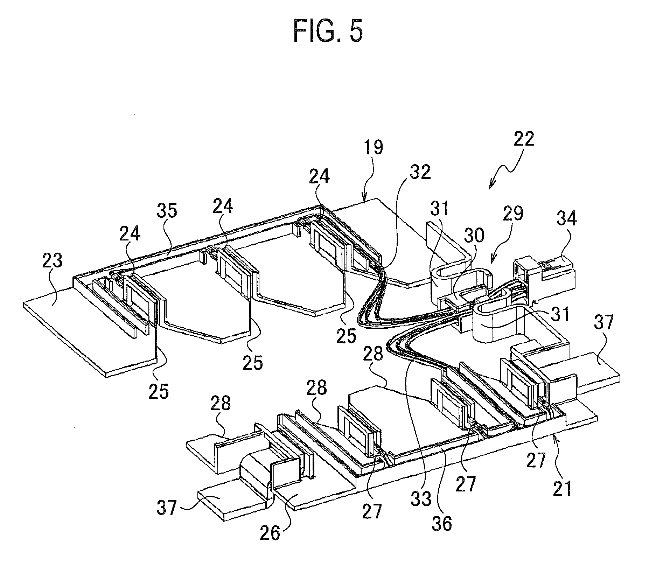

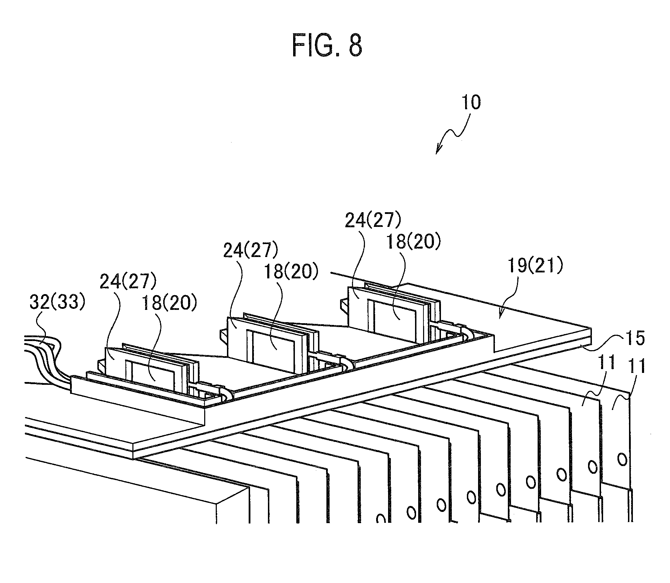

As illustrated in Figs. 5 to 8, the first slide plate 19 includes a first plate body 23 which is slidable over the one face 14 of the battery cell assembly 12, first electrode-holding vertical walls 24 disposed on the first plate body 23, and first electrode guide portions 25 disposed on the first plate body 23. The first electrode-holding vertical walls 24 support the first voltage detection terminals 18, and upon slide movement of the first plate body 23 over the one face 14 of the battery cell assembly 12, hold the positive electrodes 16 together with the first voltage detection terminals 18. By slide movement of the first plate body 23, the first electrode guide portions 25 guide the positive electrodes 16 toward the first electrode-holding vertical walls 24 on which the first voltage detection terminals 18 are supported.

The first plate body 23 has a rectangular shape and the first electrode-holding vertical walls 24 are erected at a predetermined interval (i.e., the pitch of the positive electrodes 16). The first voltage detection terminals 18 are fixed to the first electrode-holding vertical walls 24. The positive electrode 16 is inserted between the first voltage detection terminal 18 and one wall of the first electrode-holding vertical walls 24 from a side of the first voltage detection terminal 18, by which the positive electrode 16 and the first voltage detection terminal 18 are connected. This connection may be connected by welding (i.e., laser, ultrasonic waves), swage (i.e., eyelet) or the like.

On one end side of the first electrode-holding vertical walls 24, the first electrode guide portion 25 is formed. The first electrode guide portion 25 is formed with a fan-shaped cutout whose diameter is gradually expanded from both walls of the first electrode-holding vertical walls 24 outward, and both side walls of this cutout become slopes. Moreover, when the first slide plate 19 is slid over the one face 14, in a case that no positional shift of the positive electrode 16 is occurring, the positive electrode 16 is inserted between the first electrode-holding vertical walls 24 without touching the taper portions of the fan-shaped cutout, but even if there is a positional shift of the positive electrode 16, the positive electrode 16 is guided to a proper position along the taper portions of the fan-shaped cutout.

The second slide plate 21 has approximately the same shape as the first slide plate 19, and includes a second plate body 26 which is slidable over the one face 14 of the battery cell assembly 12, second electrode-holding vertical walls 27 disposed on the second plate body 26, and second electrode guide portions 28 disposed on the second plate body 26. The second electrode-holding vertical walls 27 support the second voltage detection terminals 20, and upon slide movement of the second plate body 26 over the one face 14 of the battery cell assembly 12, hold the negative electrodes 17 together with the second voltage detection terminals 20. By slide movement of the second plate body 26, the second electrode guide portions 28 guide the negative electrodes 17 toward the second electrode-holding vertical walls 27 on which the second voltage detection terminals 20 are supported.

The second plate body 26 has approximately the same rectangular shape as first slide plate 19 and the second electrode-holding vertical walls 27 are erected at a predetermined interval (i.e., the pitch of the negative electrodes 17). The second voltage detection terminals 20 are fixed to the second electrode-holding vertical walls 27. The negative electrode 17 is inserted between the second voltage detection terminal 20 and one wall of the second electrode-holding vertical walls 27 from a side of the second voltage detection terminal 20, by which the negative electrode 17 and the second voltage detection terminal 20 are connected. This connection may be connected by welding (i.e., laser, ultrasonic waves), swage (i.e., eyelet) or the like.

On one end side of the second electrode-holding vertical walls 27, the second electrode guide portion 28 is formed. The second electrode guide portion 28 is formed with a fan-shaped cutout whose diameter is gradually expanded from both walls of the second electrode-holding vertical walls 27 outward, and both side walls of this cutout become slopes. Moreover, when the second slide plate 21 is slid over the one face 14, in a case in which no positional shift of the negative electrode 17 is occurring, the negative electrode 17 is inserted between the second electrode-holding vertical walls 27 without touching the taper portions of the fan-shaped cutout, but even if there is a positional shift of the negative electrode 17, the negative electrode 17 is guided to a proper position along the taper portions of the fan-shaped cutout.

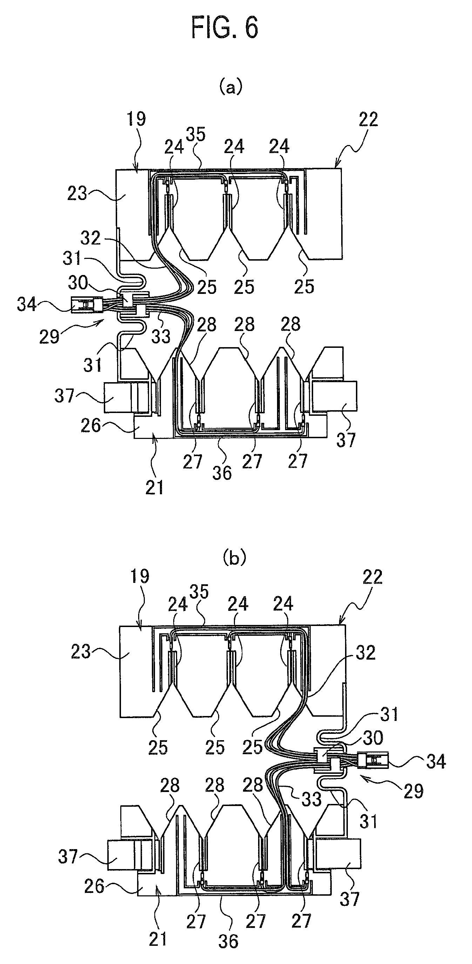

As illustrated in Figs. 5 and 6, the first slide plate 19 and the second slide plate 21 are connected either between their one end sides or between their other end sides via a flexible coupling part 29. With the flexible coupling part 29 at the center, the first slide plate 19 and the second slide plate 21 are swingable so as to be capable of mutually approaching to or separating from each other.

The flexible coupling part 29 includes a bundle part 30 that bundles one end side or the other end side of first conductors (i.e., first electric wires) 32 and second conductors (i.e., second electric wires) 33, and flexible parts 31 which are disposed on both sides of the bundle part 30 and connects the first slide plate 19 and the second slide plate 21 with the bundle part 30.

The electrode connecting body 22 includes the first conductors (first electric wires) 32 connected to the first voltage detection terminals 18 at one ends, the second conductors (second electric wires) 33 connected to the second voltage detection terminals 20 at one ends, and a bundle connector 34 which is coupled with the other end side of the first conductors 32 and the second conductors 33 and is connected externally. The first conductors 32 and the second conductors 33 transmit voltage signals detected at the detection electrodes that detect voltage of the unit cell 11 (the first voltage detection terminals 18 and the second voltage detection terminals 20) to a voltage controller (not illustrated).

The first conductors 32 are wired within a first conductor guide passage 35 disposed on the first slide plate 19. The second conductors 33 are wired within a second conductor guide passage 36 disposed on the second slide plate 21. Moreover, the first conductors 32 and the second conductors 33 are guided to the flexible coupling part 29 and are put together to be bundled at the bundle part 30. Further, the tip portion side of the first conductors 32 and the second conductors 33 are coupled to the bundle connector 34 to be connected externally.

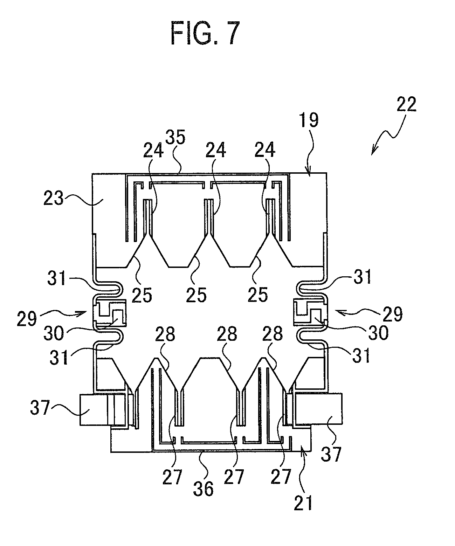

As illustrated in Fig. 7, the flexible coupling part 29 that couples the first slide plate 19 and the second slide plate 21 is manufactured in a state that it is disposed at both one end side and the other end side. Then, as necessary, that is, in a case that the direction of taking out the first conductors 32 and the second conductors 33 for voltage detection are wired to the left side on the sheet of Fig. 7, the flexible coupling part 29 on the right side on the sheet of Fig. 7 is removed. Conversely, in a case that the first conductors 32 and the second conductors 33 for voltage detection are wired to the right side on the sheet of Fig. 7, the flexible coupling part 29 on the left side on the sheet of Fig. 7 is removed.

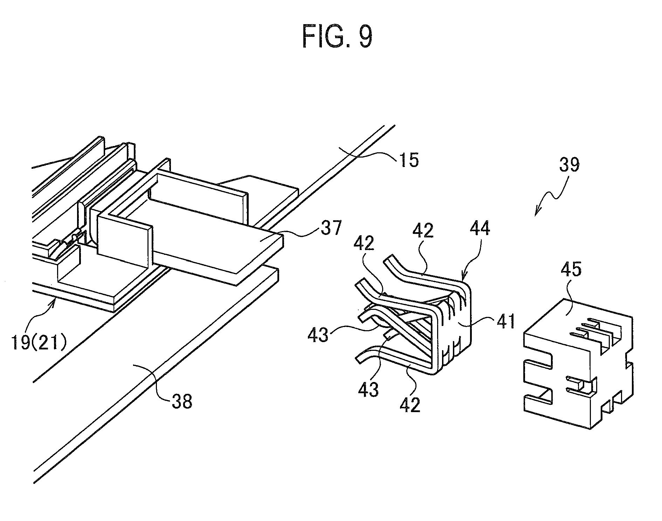

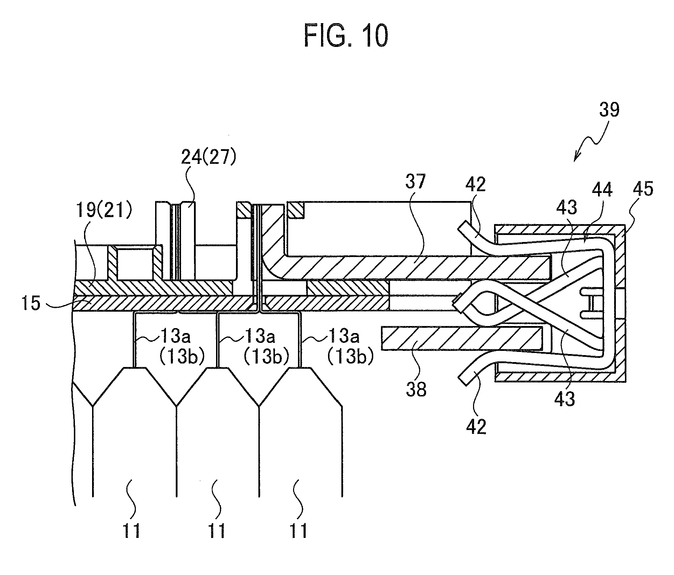

Next, connection in the case of arranging the battery cell assemblies 12 longitudinally and horizontally to form one power supply device, as illustrated in Fig. 1, will be explained by referring to Figs. 9 and 10.

On the first slide plate 19 of the electrode connecting body 22 assembled on the one face 14 of the battery cell assembly 12, a total buss bar 37 in which adjacent positive electrodes of the unit cells 11 that constitute the battery cell assembly 12 are mutually connected with each other is assembled. The total busbar 37 extends from the battery cell assembly 12 to an adjacent battery cell assembly 12. On the other hand, on the first slide plate 19 of the adjacent battery cell assembly 12, a coupling busbar 38 is assembled. The total busbar 37 and the coupling busbar 38 are connected by a joining connector 39.

The joining connector 39 includes a conductive terminal 44 formed in a generally U-shape, and a housing 45 in which the conductive terminal 44 is received. The terminal 44 includes a base 41, a pair of spring pieces 42 that are extended from both sides of the base 41, and a pair of elastic pieces 43 disposed integrally between the spring pieces 42.

Further, as illustrated in Fig. 10, the total busbar 37 is held between one of the spring pieces 42 and one of the elastic pieces 43, and the coupling busbar 38 is held between the other of the spring pieces 42 and the other of the elastic pieces 43. As a result, the coupling busbar 38 and the total busbar 37 are electrically connected and adjacent battery cell assemblies 12 are electrically connected with each other.

As explained above, in the power supply device 10 according to the embodiment, the plate-like positive electrodes 16 protruded from the one face side of the plurality of unit cells 11 are connected to the first voltage detection terminals 18 assembled to the first slide plate 19 by slide movement of the first slide plate 19 which slides over the one face 14, and the plate-like negative electrodes 17 protruded from the one face side of the plurality of unit cells 11 are connected to the second voltage detection terminals 20 assembled to the second slide plate 21 by slide movement of the second slide plate 21 which slides over the one face 14. In this case, by the sliding of the first slide plate 19, the positive electrodes 16 and the first voltage detection terminals 18 are connected, and by the sliding of the second slide plate 21, the negative electrodes 17 and the second voltage detection terminals 20 are connected. In other words, in the embodiment, when connecting the voltage detection terminals to the positive electrodes 16 and the negative electrodes 17, the voltage detection terminals do not come into contact from the above of the unit cells 11 (i.e., the protruding direction side of the positive electrodes 16 and the negative electrodes 17) as in the conventional example of PTL 1, and thus, the positive electrodes and the negative electrodes are not deformed.

Moreover, in the embodiment, the first voltage detection terminals 18 are simply assembled to the first slide plate 19 so as to connect the positive electrodes 16 and the first voltage detection terminals 18, and the second voltage detection terminals 20 are simply assembled to the second slide plate 21 so as to connect the negative electrodes 17 and the second voltage detection terminals 20. Therefore, in the embodiment, parts such as busbars and terminals become unnecessary and it becomes possible that the number of parts count is reduced, and thus, it also makes weight reduction possible.

Furthermore, in the embodiment, when the first slide plate 19 is slid over the one face of the unit cells 11 from one end side, the first voltage detection terminals 18 of the first electrode-holding vertical walls 24 are connected with the positive electrodes 16 of the unit cells 11, and when the second slide plate 21 is slid over the one face of the unit cells 11 from the other end side, the second voltage detection terminals 20 of the second electrode-holding vertical walls 27 are connected to the negative electrodes 17 of the unit cells 11. Therefore, even if there is a positional shift occurring between the first voltage detection terminal 18 and the positive electrode 16 of the unit cells 11, the first electrode guide portion 25 guides the positive electrode 16 to a proper position, and even if there is a positional shift occurring between the second voltage detection terminal 20 and the negative electrode 17 of the unit cells 11, the second electrode guide portion 28 guides the negative electrode 17 to a proper position. As a result, it becomes possible to make sure that a collision between the positive electrode 16 and the first voltage detection terminal 18, and a collision between the negative electrode 17 and the second voltage detection terminal 20 can be prevented, and thus, it does not deform the positive electrode 16 and the negative electrode 17.

Moreover, in the embodiment, the first slide plate 19 and the second slide plate 21 are mounted on the one face of the battery cell assembly 12 in a state that the first slide plate 19 and the second slide plate 21 are in a direction of mutually separated from each other (the direction of opening) with the flexible coupling part 29 at the center, and when the first slide plate 19 and the second slide plate 21 are swung in a direction of mutually approaching (the direction of closing) with the flexible coupling part 29 at the center, the first slide plate 19 and the second slide plate 21 slidingly move over the one face 14 of the battery cell assembly 12. This causes the positive electrodes 16 of the unit cells 11 to be connected with the first voltage detection terminals 18, and the negative electrodes 17 of the unit cells 11 to be connected with the second voltage detection terminals 20.

In this case, since it is structured such that the first slide plate 19 and the second slide plate 21 are coupled via the flexible coupling part 29, it is possible to slidingly move the first slide plate 19 and the second slide plate 21 in one operation, and the connection operation becomes easy.

Moreover, in the embodiment, with the flexible part 31 at both sides of the bundle part 30, the first slide plate 19 and the second slide plate 21 can swing with the bundle part 30 at the center. With this, the first slide plate 19 and the second slide plate 21 can slidingly move over the one face 14 of the battery cell assembly 12.

In this case, the position of the bundle part 30 of the first conductor 32 and the second conductor 33 can be changed based on when one end of the first slide plate 19 and the second slide plate 21 are mutually connected at the flexible coupling part 29 or when the other end are mutually connected. Therefore, the position of the bundle connector 34 to be connected externally can be changed as necessary.

Further, in this embodiment, an example was illustrated in which the positive electrodes 16 and the negative electrodes 17 are protruded in the same direction on the one face 14 side of the battery cell assembly 12. However, in a case in which the positive electrodes 16 and the negative electrodes 17 are protruded from different faces respectively also, it is possible to make only the first slide plate 19 slide over the one face 14 so as to connect the positive electrodes 16 with the first voltage detection terminals 18, and make the second slide plate 21 slide over another face on which the negative electrodes 17 are protruded so as to connect the negative electrodes 17 with the second voltage detection terminals 20. In this case, the first slide plate 19 and the second slide plate 21 slide independently over the one face 14 and over the other face without being coupled by the flexible coupling part 29.

### INDUSTRIAL APPLICABILITY

According to the present invention, a power supply device can be provided which enables connection between electrodes of adjacent unit cells and connection with voltage detection electrodes of unit cells can be performed without deforming the positive electrodes and negative electrodes, which can reduce the number of parts count for the connection, and which can reduce the weight.

## Claims

1. A power supply device in which on one face side of a battery cell assembly including a plurality of unit cells, each of the unit cells having a positive cell electrode and a negative cell electrode that project from one face side, which are stacked in parallel with the positive cell electrode and the negative cell electrode of adjacent unit cells being alternately arranged and being connected in series, a positive electrode for voltage detection connected to the positive cell electrode and a negative electrode for voltage detection connected to the negative cell electrode are protruded, and in which the positive electrode is connected to a first voltage detection terminal and the negative electrode is connected to a second voltage detection terminal, comprising
an electrode connecting body comprising:
a first slide plate that connects the positive electrode with the first voltage detection terminal by slide movement over the one face of the battery cell assembly from one end side; and
a second slide plate that connects the negative electrode with the second voltage detection terminal by slide movement over the one face of the battery cell assembly from the other end side.

2. The power supply device according to claim 1, wherein
the first slide plate comprises:
a first plate body capable of slide movement over the one face of the battery cell assembly from one end side;
a first electrode-holding vertical wall disposed on the first plate body which supports the first voltage detection terminal and which holds the positive electrode and the first voltage detection terminal together by slide movement of the first plate body over the one face of the battery cell assembly; and
a first electrode guide portion disposed on the first plate body which guides the positive electrode to the first electrode-holding vertical wall that supports the first voltage detection terminal by the slide movement of the first plate body, and
the second slide plate comprises:
a second plate body capable of slide movement over the one face of the battery cell assembly from the other end side;
a second electrode-holding vertical wall disposed on the second plate body which supports the second voltage detection terminal and which holds the negative electrode and the second voltage detection terminal together by slide movement of the second plate body over the one face of the battery cell assembly; and
a second electrode guide portion disposed on the second plate body which guides the negative electrode to the second electrode-holding vertical wall that supports the second voltage detection terminal by the slide movement of the second plate body.

3. The power supply device according to claim 1 or 2, wherein
the first slide plate and the second slide plate are mutually coupled either at one end side thereof or at the other end side thereof via a flexible coupling part, and
the first slide plate and the second slide plate are swingable so as to be capable of mutually approaching to or separating from each other.

4. The power supply device according to claim 3, wherein
the electrode connecting body further comprises:
a first conductor whose one end side is connected to the positive electrode;
a second conductor whose one end side is connected to the negative electrode; and
a bundle connector which is connected to the other end side of the first conductor and the second conductor and which is connected externally, and
the flexible coupling part comprises:
a bundle part that bundles the other end side of the first conductor and the second conductor immediately before the bundle connector; and
a flexible part disposed on both sides of the bundle part which couples the first slide plate with the bundle part and which couples the second slide plate with the bundle part.
